# EUROPÄISCHE PATENTANMELDUNG

(11) **EP 1 160 036 A1**
(43) Veröffentlichungstag der Anmeldung: **05.12.2001**
(21) Anmeldenummer: 00110567.5
(22) Anmeldetag: 18.05.2000
(51) Int. Cl.: B23B 29/034, F16D 3/223

(54) **Verfahren zur Bearbeitung von Öffnungen in Werkstücken**

(71) Anmelder: Visteon Global Technologies, Inc., Dearborn, Michigan 48126 (US)
(72) Erfinder: Alvarez-Mendez, Angel, 52223 Stolberg (DE); Steude, Volker, 50765 Köln (DE)
(74) Vertreter: Bonsmann, Manfred, Dipl.-Ing.

(57) **Zusammenfassung**

Bei einem Verfahren zur Bearbeitung von Öffnungen in Werkstücken wird vorgeschlagen, zwei Schneidkanten (11, 12) eines um eine Rotationsachse (15) drehenden Schneidwerkzeuges (2) längs einer Schneidkantenachse in einem Abstand zueinander anzuordnen, der größer als der Sollabstand zweier einander gegenüberliegender, zu bearbeitender Öffnungsränder (6, 7) längs einer Öffnungsachse (9) ist, die diese Öffnungsränder durchläuft. Die Öffnungsachse und die Schneidkantenachse werden in einer Anfangsstellung in einem spitzen Winkel (α) so zueinander schräggestellt, daß der gegenseitige Abstand der Schneidkanten parallel zur Öffnungsachse (9) gleich dem Sollabstand der Öffnungsränder ist. Bei einem Verschleiß der Schneidkanten wird der Schrägstellungswinkel verringert, so daß der Schneidkantenabstand parallel zur Öffnungsachse weiterhin dem Sollabstand der Öffnungsränder entspricht.

## Beschreibung

Die Erfindung bezieht sich auf ein Verfahren zur Bearbeitung von Öffnungen in Werkstücken, insbesondere von Fenstern in Kugelkäfigen für Gleichlaufgelenke, mit den folgenden Schritten: Bereitstellen eines Schneidwerkzeugs, das um eine Rotationsachse dreht und zwei längs der Rotationsachse mit Abstand zueinander angeordnete Schneidkanten aufweist, die eine beide durchlaufende Schneidkantenachse festlegen; Haltern eines Werkstücks nahe dem Schneidwerkzeug derart, daß eine gedachte Öffnungsachse, die zwei einander gegenüberliegende, zu bearbeitende Öffnungsränder durchläuft, in einer vorgegebenen Ausrichtung zur Schneidkantenachse verläuft, und Bearbeiten der Öffnungsränder des Werkstücks, indem ein Öffnungsrand mit der einen Schneidkante und der andere Öffnungsrand mit der anderen Schneidkante geschnitten wird, wobei die beiden Öffnungsränder im Fertigzustand einen gegenseitigen Sollabstand längs der Öffnungsachse aufweisen.

In nahezu jedem Personenkraftfahrzeug werden zwei Gleichlaufgelenke benötigt. Bei der Fertigung dieser Gleichlaufgelenke müssen in Kugelkäfige Fenster mit sehr genauer Toleranz eingearbeitet werden. Das Maß muss auf wenige 1/1000 mm genau sein, um ein spielfreies Führen der Kugel zu gewährleisten. Üblicherweise werden die Fenster der Kugelkäfige zunächst eingestanzt und anschließend mit einem Einzahnfräser fertigbearbeitet, der auf einer angetriebenen Spindel sitzt. Der durch die Bearbeitung auftretende Schneidkantenverschleiß ist hierbei eine nicht zu vernachlässigende Größe.

Aus der EP 0 952 364 A1 ist ein derartiges Verfahren zur Fertigbearbeitung der Fenster von Kugelkäfigen bekannt. Um das genaue Maß für die Höhe bzw. die Breite eines Fensters bei einem derartigen Verfahren einzuhalten, wird üblicherweise zunächst mit einer Schneidkante ein Rand des Fensters bearbeitet, und danach mit der gegenüberliegenden Schneidkante der gegenüberliegende Rand des Fensters bearbeitet. Der Verschleiß des Werkzeuges wird dabei ausgeglichen, indem das Fenstermaß nachgemessen und bei drohender Überschreitung der Toleranzen die Position der jeweiligen Schneidkante an die entsprechende Grenze des Toleranzbereiches verschoben wird. Auf diese Weise ist es möglich, trotz Werkzeugverschleiß die sehr engen Toleranzen der Fenstermaße einzuhalten. Nachteilig bei einer derartigen Vorgehensweise ist, daß die Bearbeitungszeit relativ lang ist. Aus der EP 0 952 364 A1 ist es zwar bekannt, zwei gegenüberliegende Öffnungsränder des Fensters gleichzeitig mit einem Werkzeug zu bearbeiten, was zu einer Reduktion der Bearbeitungszeit führt. In diesem Dokument wird jedoch kein Hinweis darauf gegeben, wie angesichts der auftretenden Verschleißerscheinungen des Werkzeugs die engen Toleranzanforderungen über die Standzeit der Werkzeugs eingehalten werden können.

Demgegenüber liegt die Aufgabe der vorliegenden Erfindung darin, ein Verfahren der eingangs genannten Art so zu verbessern, daß bei Beibehaltung einer hohen Maßgenauigkeit die Zeit für die Herstellung von Öffnungen in Werkstücken verkürzt wird.

Erfindungsgemäß wird diese Aufgabe bei einem gattungsgemäßen Verfahren durch folgende Schritte gelöst: Anordnen der zwei Schneidkanten längs der Schneidkantenachse in einem Abstand zueinander, der größer als der Sollabstand der Öffnungsränder ist; Schrägstellen der gedachten Öffnungsachse und der Schneidkantenachse in einer Anfangsstellung in einem spitzen Winkel so zueinander, daß der gegenseitige Abstand der Schneidkanten parallel zur Öffnungsachse gleich dem Sollabstand der Öffnungsränder ist, und Verringern des Schrägstellungswinkels bei einem Verschleiß der Schneidkanten, so daß der Schneidkantenabstand parallel zur Öffnungsachse weiterhin dem Sollabstand der Öffnungsränder entspricht.

Durch die erfindungsgemäßen Maßnahmen können Öffnungen in Werkstücken in einem Bearbeitungsschritt, d.h. in nur einem Schnitt, bearbeitet und dadurch die Bearbeitungszeiten halbiert werden, ohne daß die Bearbeitungsgenauigkeit beeinträchtigt ist. Da die Schneidkantenachse zur Mittenachse der herzustellenden Öffnung schräggestellt wird und diese Schrägstellung mit zunehmendem Verschleiß der Schneidkanten reduziert wird, wird die verschleißbedingte Abnahme des Schneidkantenabstands kompensiert und dadurch der Sollabstand der Öffnungsränder beibehalten. Erfindungsgemäß wird somit ein Schneidkantenverschleiß an beiden Schneidkanten gleichzeitig kompensiert. Die Fensterbreite eines Kugelkäfigs beispielsweise wird so in einem Schnitt erzeugt, wobei die Fensterbreite über die Werkzeugstandzeit bzw. trotz Werkzeugverschleiß konstant gehalten wird. Das Schneidwerkzeug kann dabei relativ zur gedachten Fensterachse um einen Fixpunkt geschwenkt werden.

Die Erfindung wird vorzugsweise zur Fertig- bzw. Nachbearbeitung von bereits in vorherigen Arbeitsschritten hergestellten Öffnungen eingesetzt, wenngleich der Begriff der Bearbeitung der Öffnungsränder auch die vollständige Herstellung einer Öffnung in einem Werkstück umfassen kann.

Vorzugsweise werden im Rahmen der Erfindung die Öffnungsachse und die Schneidkantenachse in der Anfangsstellung um etwa 5° zueinander geneigt. In diesem Winkelbereich bis maximal ungefähr 5° ist die aufgrund der Schrägstellung unterschiedliche Bearbeitungstiefe an den beiden einander gegenüberliegenden Öffnungsrändern so gering, insbesondere bei Fenstern in Kugelkäfigen für Gleichlaufgelenke, daß sie in der Praxis vernachlässigbar ist.

In einer vorteilhaften Weiterbildung der Erfindung wird der Schrägstellungswinkel von der Anfangsstellung aus bis auf etwa 0° verringert, wobei bei etwa 0° die Schneidkanten vollständig verschlissen sind. Mit diesen Maßnahmen wird das Schneidwerkzeug - unter Vermeidung einer fertigungstechnisch unerwünschten zu großen anfänglichen Schrägstellung - optimal ausgenutzt, wobei auch noch der Verschleißgrad anhand der Schrägstellung abgelesen werden kann.

In einer bevorzugten Ausgestaltung der Erfindung wird zum Anordnen und Verringern des Schrägstellungswinkels die Neigung der Schneidkantenachse verändert. Dabei werden besonders bevorzugt die Schneidkantenachse und die Rotationsachse starr miteinander verbunden. Zum Anordnen und Verringern des Schrägstellungswinkels wird dann die Neigung der Rotationsachse verändert. Bevorzugt wird dabei die Schneidkantenachse parallel zur Rotationsachse des Schneidwerkzeugs angeordnet. Die Schneidkantenachse kann jedoch im Rahmen der Erfindung auch nicht parallel zur Rotationsachse angeordnet sein.

In vorteilhafter Weiterbildung der Erfindung kann zum Anordnen und Verringern des Schrägstellungswinkels auch die Neigung des Werkstücks verändert werden, wobei die Neigung der Schneidkantenachse wahlweise konstant gehalten oder gleichzeitig auch verändert werden kann.

Mit den vorstehend angegebenen Maßnahmen kann die CNC-Technik je nach vorhandenen Randbedingungen optimal ausgenützt werden.

In weiterer günstiger Ausgestaltung der Erfindung wird das Werkstück in dieselbe Drehrichtung in Drehung versetzt wie das Schneidwerkzeug, so daß die Umfangsfläche des Werkstücks und die Schneidkanten in der Berührungsebene zueinander gegenläufig bewegt und mit den Schneidkanten entlang der Umfangsfläche in regelmäßigen Abständen Öffnungen bearbeitet werden. Hierdurch wird auf einfache Weise das Werkstück, insbesondere ein Kugelkäfig für Gleichlaufgelenke, hinsichtlich der Öffnungen bzw. Fenster in einem Arbeitsgang vollständig fertigbearbeitet. Neben der vorstehend beschriebenen gegenläufigen Bewegung ist auch eine gleichläufige Rotation möglich.

Alternativ kann die Bearbeitung auch derart erfolgen, daß das Werkstück während der Bearbeitung der einzelnen Öffnungen feststeht und nach erfolgter Bearbeitung der Einzelöffnung das Werkstück in eine Position gebracht wird, die die Bearbeitung der jeweils nächsten Öffnung erlaubt.

In weiterer vorteilhafter Ausgestaltung des erfindungsgemäßen Verfahrens kann vorgesehen sein, daß am Ende des Bearbeitungsvorganges einer Öffnung der Schrägstellungswinkel derart vergrößert wird, daß die Bildung von Rückzugsriefen in den Öffnungsrändern bei einem nachfolgenden Herausfahren des Schneidwerkzeugs aus der Öffnung vermieden wird. Würde der Schrägstellungswinkel nicht vergrößert und das Werkzeug in Richtung der Flächennormale der bearbeiteten Werkstückfläche herausgezogen, so würden durch die Schrägstellung zumindest an einem Öffnungsrand unerwünschte Rückzugsriefen entstehen. Durch eine - im allgemeinen nur geringfügige - Vergrößerung des Schrägstellungswinkels und die damit verbundene Verringerung der effektiven Breite des Schneidwerkzeuges kann dieser Effekt jedoch vermieden werden. Zur Bearbeitung der jeweils nächsten Öffnung wird die genannte Winkelveränderung zweckmäßigerweise - sofern keine Winkelveränderung zur Kompensation der Verschleißerscheinungen erforderlich ist - wieder rückgängig gemacht.

Alternativ können Rückzugsriefen auch dadurch vermieden werden, daß das Werkzeug vor dem Weiterdrehen des Werkstücks in einem Zustand vor dem Wiedereintauchen in die nächste zu bearbeitende Öffnung angehalten wird. Hierdurch ist ein Wegfahren des Werkstücks möglich, ohne daß Rückzugsriefen entstehen.

Die Erfindung wird nachfolgend anhand der Zeichnung beispielshalber noch näher erläutert. Es zeigen:
- Figur 1: in einer schematischen Darstellung eine geschnittene Ansicht eines Kugelkäfigs für Gleichlaufgelenke und ein Schneidwerkzeug, die nach dem erfindungsgemäßen Verfahren zueinander schräggestellt sind;
- Figur 2: eine schematische Darstellung einer dreieckigen Schneidplatte in der Anfangsstellung, in der die Schneidkantenachse um einen Winkel zur Vertikalen schräggestellt ist, und in der Endstellung, in der die Schneidkante vollständig verschlissen ist und der Schrägstellungswinkel auf 0° reduziert wurde;
- Figur 3: eine schematische Darstellung eines zweiten Anwendungsbeispiels des erfindungsgemäßen Verfahrens, bei dem die Öffnungsachse zur Vertikalen geneigt ist.

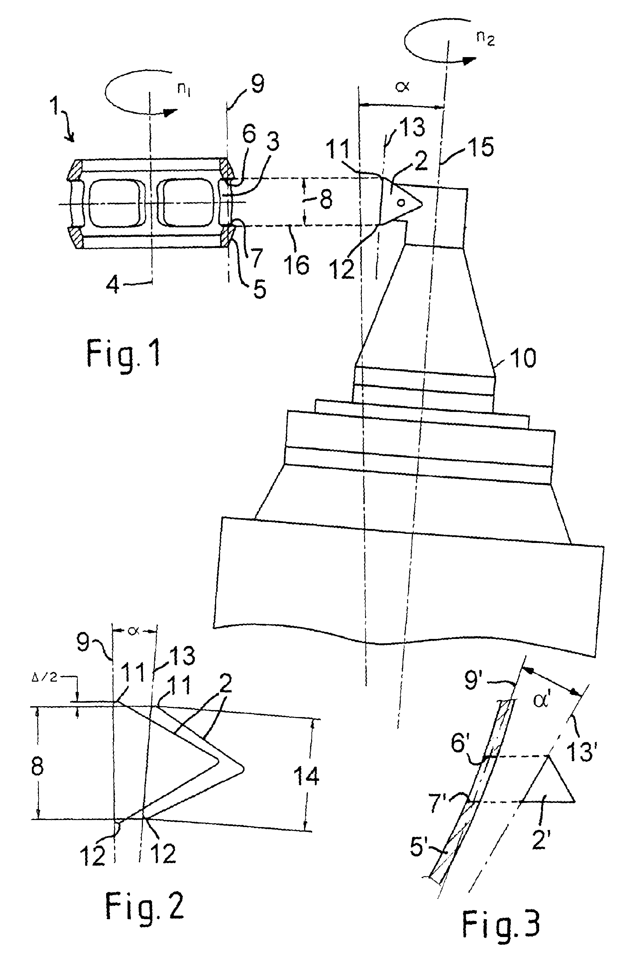

In Figur 1 ist als Ausführungsbeispiel ein Kugelkäfig 1 für Gleichlaufgelenke dargestellt, in den mittels eines Schneidwerkzeuges 2, im dargestellten Beispiel ein dreieckförmiger Einzahnfräser, Fensterränder 6, 7 bearbeitet werden sollen.

Der Kugelkäfig 1 im gezeigten Beispiel ist rotationssymmetrisch ausgebildet mit einer Rotations- bzw. Längsachse 4 und einer bogenförmigen Umfangswand 5, die nach außen hin ausgebaucht und deren Scheitelpunkt in der Mitte ihrer Längserstreckung ist. In Umfangsrichtung sollen in dem Kugelkäfig 1 in regelmäßigen Abständen Fensterränder 6, 7 fertigbearbeitet werden, die in Figur 1 mit ihren Fertigmaßen dargestellt sind. Die oberen und unteren Fensterränder 6, 7 verlaufen in Dickenrichtung der Umfangswand 5 rechtwinklig zur Längsachse 4 des Kugelkäfigs 1 und weisen einen gegenseitigen Sollabstand 8 parallel zu einer sie durchlaufenden, gedachten Fensterachse 9 auf. Die gedachte Fensterachse 9 verläuft jeweils durch die Mitte der Dicken- bzw. Horizontalerstreckung der Fensterränder 6, 7 und in dem in Figur 1 dargestellten Beispiel parallel zur Längsachse 4 des Kugelkäfigs 1.

Das Schneidwerkzeug ist im dargestellten Beispiel ein dreieckiger Einzahnfräser 2, der an der Spindel 10 einer CNC-Werkzeugmaschine befestigt ist. Die Schneidplatte des Einzahnfräsers 2 weist zwei Schneidkanten 11, 12 auf, die eine beide durchlaufende Schneidkantenachse 13 festlegen. Die in Figur 1 obere Schneidkante 11 dient zum Bearbeiten des oberen Fensterrandes 6 und die untere Schneidkante 12 zum Bearbeiten des unteren Fensterrandes 7. Längs der Schneidkantenachse 13 sind die beiden Schneidkanten 11, 12 mit einem Abstand 14 zueinander angeordnet, der größer als der Abstand 8 der zu bearbeitenden Fensterränder 6, 7 längs der Fensterachse 9 ist. Die Schneidkantenachse 13 verläuft im dargestellten Beispiel parallel zur Rotationsachse 15 der Werkzeugspindel.

Zum Bearbeiten der Fensterränder 6, 7 werden die Längsachse 4 des Kugelkäfigs 1 bzw. die Fensterachse 9 und die Schneidkantenachse 13 zueinander in einem spitzen Winkel α schräg gestellt, so daß der Abstand 14 (vgl. Fig. 2) der Schneidkanten 11, 12 in Richtung der gedachten Fensterachse 9, d. h. in einer zu den Fensterrändern 6, 7 parallelen Projektionsrichtung 16, dem Sollabstand 8 der Fensterränder 6, 7 entspricht. Im dargestellten Beispiel beträgt der Schrägstellungswinkel α etwa 5°.

In Figur 2 ist im Detail dargestellt, daß im Anfangszustand - d.h. im unverschlissenen Zustand - der Abstand 14 der Schneidkanten 11, 12 längs der Schneidkantenachse 13 um ein Maß Δ größer ist als der Sollabstand 8 der Fensterränder 6, 7 (vgl. Fig. 1), so daß die Schneidkanten 11, 12 ohne Schrägstellung jeweils um Δ/2 über den jeweils zu bearbeitenden Fensterrand 6, 7 hinausstehen würden. Durch Schrägstellung von Fensterachse 9 und Schneidkantenachse 13 zueinander wird der Schneidkantenabstand 14 in Richtung Fensterachse 9 verringert entsprechend der geometrischen Beziehung: Schneidkantenabstand in Richtung Fensterachse 9 = Schneidkantenabstand 14 in Richtung Schneidkantenachse 13 · cos α.

Mit dieser anfänglichen Schrägstellung wird das Bearbeiten der Fensterränder 6, 7 begonnen. Mit zunehmenden Verschleiß der Schneidkanten 11, 12 wird der Schrägstellungswinkel α immer mehr gegen 0° reduziert, um die verschleißbedingte Abnahme des Schneidkantenabstandes 14 bzw. der Schneidwerkzeugbreite zu kompensieren. Hierbei kann die Neigung des Kugelkäfigs 1 verändert werden und/oder die der Schneidkantenachse 13. Im dargestellten Beispiel ist die Schneidplatte des Einzahnfräsers 2 starr an der Spindel 10 befestigt und wird die Neigung der Schneidkantenachse 13 verändert, indem die Neigung der Rotationsachse 15 der Spindel 10 verändert wird. Beide Fensterränder 6, 7 werden gleichzeitig genau auf Maß bearbeitet, wodurch die Bearbeitungszeit gegenüber dem Stand der Technik bei Wahrung der Toleranzbreite über die Standzeit des Werkzeugs halbiert wird. Das Verschleißmaß Δ und der Schrägstellungswinkel α werden so eingestellt, daß das Werkzeug 2 etwa dann vollständig verschlissen ist, wenn der Schrägstellungswinkel α auf 0° reduziert worden ist.

Bei dem in Figur 3 dargestellten Ausführungsbeispiel verläuft die Fensterachse 9' zur Vertikalen geneigt, wobei die Fensterränder 6', 7' in Dickenrichtung der Umfangswand 5' horizontal verlaufen, so daß die Fensterränder 6', 7' horizontal zueinander versetzt sind. Wie im vorstehend beschriebenen Ausführungsbeispiel wird die Schneidkantenachse 13' anfänglich unter einem Winkel α' zur Fensterachse 9' schräggestellt. Mit fortschreitendem Verschleiß des Schneidwerkzeuges 2' wird wieder der Schrägstellungswinkel α' reduziert, so daß beide, horizontal zueinander versetzte Fensterränder 6', 7' gleichzeitig, d.h. in einem Schnitt, fertigbearbeitet werden.

Wie in Figur 1 angedeutet, kann das Werkstück bzw. der Kugelkäfig 1 in derselben Drehrichtung wie das Schneidwerkzeug 2 gedreht werden, so daß die Umfangsfläche, in der die Fensterränder 6, 7 bearbeitet werden sollen, und das Werkzeug 2 in der Berührungsebene in entgegengesetzter Richtung bewegt werden. Auf diese Weise arbeitet das Werkzeug 2 entlang der Umfangsfläche des Werkstücks bzw. des Kugelkäfigs 1 in regelmäßigen Abständen die Fensterflächen aus. Werkstück 1 und Schneidwerkzeug 2 werden hierbei in einem vorgegebenen Drehzahlverhältnis n₁/n₂ zueinander gedreht. Wenn beispielsweise entlang des Umfangs des Kugelkäfigs 1 sechs Fenster 3 hergestellt werden sollen, rotiert das Werkzeug 2 sechsmal so schnell wie der Kugelkäfig 1. Alternativ zu einer gegenläufigen Rotation ist auch eine gleichsinnige Rotation möglich.

## Patentansprüche

1. Verfahren zur Bearbeitung von Öffnungen in Werkstücken, insbesondere von Fenstern in Kugelkäfigen für Gleichlaufgelenke, mit den folgenden Schritten:
- Bereitstellen eines Schneidwerkzeugs, das um eine Rotationsachse dreht und zwei längs der Rotationsachse mit Abstand zueinander angeordnete Schneidkanten (11, 12) aufweist, die eine beide durchlaufende Schneidkantenachse festlegen,
- Haltern eines Werkstücks nahe dem Schneidwerkzeug derart, daß eine gedachte Öffnungsachse (9), die zwei einander gegenüberliegende, zu bearbeitende Öffnungsränder (6, 7) durchläuft, in einer vorgegebenen Ausrichtung zur Schneidkantenachse verläuft, und
- Bearbeiten der Öffnungsränder des Werkstücks, indem ein Öffnungsrand mit der einen Schneidkante und der andere Öffnungsrand mit der anderen Schneidkante bearbeitet wird, wobei die beiden Öffnungsränder im Fertigzustand einen gegenseitigen Sollabstand (8) längs der Öffnungsachse aufweisen,
**gekennzeichnet durch** folgende Schritte:
- Anordnen der zwei Schneidkanten (11, 12) längs der Schneidkantenachse (13) in einem Abstand (14) zueinander, der größer als der Sollabstand (8) der Öffnungsränder (6, 7) ist,
- Schrägstellen der Öffnungsachse (9) und der Schneidkantenachse (13) in einer Anfangsstellung in einem spitzen Winkel (α) so zueinander, daß der gegenseitige Abstand der Schneidkanten (11, 12) parallel zur Öffnungsachse (9) gleich dem Sollabstand (8) der Öffnungsränder (6, 7) ist, und
- Verringern des Schrägstellungswinkels (α) bei einem Verschleiß der Schneidkanten (11, 12), so daß der Schneidkantenabstand parallel zur Öffnungsachse (9) weiterhin dem Sollabstand (8) der Öffnungsränder (6, 7) entspricht.

2. Verfahren nach Anspruch 1, **dadurch gekennzeichnet, daß** die Öffnungsachse (9) und die Schneidkantenachse (13) in der Anfangsstellung um bis zu 5° zueinander schräggestellt werden.

3. Verfahren nach Anspruch 1 oder 2, **dadurch gekennzeichnet, daß** der Schrägstellungswinkel (α) von der Anfangsstellung aus bis auf etwa 0° verringert wird, wobei bei etwa 0° die Schneidkanten (11, 12) vollständig verschlissen sind.

4. Verfahren nach einem der Ansprüche 1 bis 3, **dadurch gekennzeichnet, daß** zum Anordnen und Verringern des Schrägstellungswinkels (α) die Neigung der Schneidkantenachse (13) verändert wird.

5. Verfahren nach Anspruch 4, **dadurch gekennzeichnet, daß** die Schneidkantenachse (13) und die Rotationsachse (15) starr miteinander verbunden werden und zum Anordnen und Verringern des Schrägstellungswinkels (α) die Neigung der Rotationsachse (15) verändert wird.

6. Verfahren nach Anspruch 5, **dadurch gekennzeichnet, daß** die Schneidkantenachse (13) parallel zur Rotationsachse (15) des Schneidwerkzeugs (2) angeordnet wird.

7. Verfahren nach einem der Ansprüche 1 bis 6, **dadurch gekennzeichnet, daß** zum Anordnen und Verringern des Schrägstellungswinkels (α) die Neigung des Werkstücks (1) verändert wird.

8. Verfahren nach einem der Ansprüche 1 bis 7, **dadurch gekennzeichnet, daß** das Werkstück (1) in dieselbe oder in die entgegengesetzte Drehrichtung in Drehung versetzt wird wie das Schneidwerkzeug (2), so daß die Umfangsfläche des Werkstücks (1) und die Schneidkanten (11, 12) in der Berührungsebene zueinander gegenläufig oder gleichläufig bewegt und mit den Schneidkanten (11, 12) entlang der Umfangsfläche in regelmäßigen Abständen Öffnungen (3) bearbeitet werden.

9. Verfahren nach einem der Ansprüche 1 bis 7, **dadurch gekennzeichnet, daß** der Bearbeitungsvorgang einer Öffnung bei feststehendem Werkstück (1) erfolgt.

10. Verfahren nach einem der Ansprüche 1 bis 9, **dadurch gekennzeichnet, daß** am Ende des Bearbeitungsvorganges einer Öffnung der Schrägstellungswinkel (α) derart vergrößert wird, daß die Bildung von Rückzugsriefen in den Öffnungsrändern bei einem nachfolgenden Herausfahren des Schneidwerkzeugs (2) aus der Öffnung vermieden wird.
